# EUROPÄISCHE PATENTSCHRIFT

(11) **EP 3 167 522 B1**
(45) Veröffentlichungstag und Bekanntmachung des Hinweises auf die Patenterteilung: **17.04.2019**
(21) Anmeldenummer: 15759635.4
(22) Anmeldetag: 18.08.2015
(51) Int. Cl.: H02M 3/335, H02M 1/32, H02J 1/00, H02J 1/10, H02J 3/06, H02J 3/38, H02J 7/00, H02J 7/02, H02M 1/00, G05F 1/253, H02J 1/12

(54) **REDUNDANTE SPANNUNGSVERSORGUNGSVORRICHTUNG**
REDUNDANT VOLTAGE SUPPLY DEVICE
DISPOSITIF D'ALIMENTATION EN TENSION REDONDANT

(30) Priorität: 21.08.2014 DE 102014012462
(43) Veröffentlichungstag der Anmeldung: 17.05.2017
(73) Patentinhaber: Diehl Aerospace GmbH, 88662 Überlingen (DE)
(72) Erfinder: MACHE, Erik, 88634 Herdwangen-Schönach (DE)
(74) Vertreter: Diehl Patentabteilung
(86) Internationale Anmeldenummer: PCT/EP2015/001693
(87) Internationale Veröffentlichungsnummer: WO 2016/026571

(56) Entgegenhaltungen:
- EP-A1- 2 363 947
- WO-A1-80/00899
- US-A- 4 558 230
- US-A- 4 558 230

## Beschreibung

Die Erfindung betrifft eine Spannungsversorgungsvorrichtung mit einer ersten und mit einer zweiten Hauptkanalanordnung, wobei die erste Hauptkanalanordnung einen ersten Spannungseingang für eine erste Eingangsgleichspannung und einen ersten Spannungshauptausgang für eine erste Ausgangsgleichspannung aufweist, wobei die erste Hauptkanalanordnung eine erste DC/DC-Wandlereinrichtung zur Wandlung der ersten Eingangsgleichspannung in die erste Ausgangsgleichspannung aufweist, wobei die erste DC/DC-Wandlereinrichtung eine erste in Reihe mit dem ersten Spannungshauptausgang angeordnete Ausgangsinduktivität aufweist, wobei die zweite Hauptkanalanordnung einen zweiten Spannungseingang für eine zweite Eingangsgleichspannung und einen zweiten Spannungshauptausgang für eine zweite Ausgangsgleichspannung aufweist, wobei die zweite Hauptkanalanordnung eine zweite DC/DC-Wandlereinrichtung zur Wandlung der zweiten Eingangsgleichspannung in die zweite Ausgangsgleichspannung aufweist, und wobei die zweite DC/DC-Wandlereinrichtung eine zweite in Reihe mit dem zweiten Spannungshauptausgang angeordnete Ausgangsinduktivität aufweist. Die Erfindung betrifft ferner eine Flugzeugkontrollanlage mit der Spannungsversorgungsvorrichtung sowie ein Verfahren zum Testen der Spannungsversorgungsvorrichtung und/oder der Flugzeugkontrollanlage.

Spannungsversorgungen zur Versorgung von Kontrolleinrichtungen für ein Flugzeug werden vielfach redundant ausgeführt, sodass das Versagen von einzelnen Betriebsteilen der Spannungsversorgung nicht zu einem vollständigen Versagen der Spannungsversorgung und damit der Kontrolleinrichtung führt. Dieses Vorgehen hat den Hintergrund, dass das Versagen einer derartigen Kontrolleinrichtung zu schweren Folgen für das Flugzeug führen könnte.

Beispielsweise offenbart das Patent US 4,558,230 eine Spannungsversorgung für eine Flugzeugkontrolleinrichtung, wobei die Spannungsversorgung Mehrfachausgänge bereitstellt. Die einfachste Möglichkeit für eine redundante Spannungsversorgung bildet allerdings die Verwendung von zwei Spannungsversorgungen. Ein derartiger Aufbau wird als nächstkommender Stand der Technik angenommen.

Der Erfindung liegt die Aufgabe zugrunde, mit einer überschaubaren Anzahl von Komponenten eine betriebssicher arbeitende Spannungsversorgungsvorrichtung insbesondere für eine Flugzeugkontrolleinrichtung vorzuschlagen. Diese Aufgabe wird durch eine Spannungsversorgungsvorrichtung mit den Merkmalen des Anspruchs 1, durch eine Flugzeugkontrollanlage mit dieser Spannungsversorgung mit den Merkmalen des Anspruchs 9 sowie durch ein Verfahren zum Testen der Spannungsversorgungsvorrichtung und/oder der Flugzeugkontrollanlage mit den Merkmalen des Anspruchs 10 gelöst. Bevorzugte oder vorteilhafte Ausführungsformen der Erfindung ergeben sich aus den Unteransprüchen, der nachfolgenden Beschreibung sowie den beigefügten Figuren.

Somit wird im Rahmen der Erfindung eine Spannungsversorgungsvorrichtung vorgeschlagen, welche für eine Flugzeugkontrolleinrichtung geeignet und/oder ausgebildet ist. Insbesondere stellt die Spannungsversorgungsvorrichtung mindestens eine Versorgungsspannung bereit, die von der Flugzeugkontrolleinrichtung genutzt werden kann.

Die Spannungsversorgungsvorrichtung umfasst eine erste und eine zweite Hauptkanalanordnung. Insbesondere sind die erste und die zweite Hauptkanalanordnung unabhängig voneinander ausgebildet.

Die erste Hauptkanalanordnung umfasst einen ersten Spannungseingang für eine erste Eingangsgleichspannung. Insbesondere wird die Eingangsgleichspannung von einem Bordnetz des Flugzeugs bereitgestellt. Ferner weist die erste Hauptkanalanordnung einen ersten Spannungshauptausgang für eine erste Ausgangsgleichspannung als eine erste Versorgungsspannung auf. Die erste Hauptkanalanordnung umfasst eine erste DC/DC-Wandlereinrichtung, welche zur Wandlung der ersten Eingangsgleichspannung in die erste Ausgangsgleichspannung ausgebildet ist. Bevorzugte Ausführungsformen der DC/DC-Wandlereinrichtung werden nachfolgend noch beschrieben. In der allgemeinsten Ausprägung der Erfindung kann die erste oder weitere DC/DC-Wandlereinrichtung(en) zum Beispiel als Aufwärtswandler, Abwärtswandler oder Hoch-Tief-Setzer ausgebildet sein. Besonders bevorzugt sind die erste DC/DC-Wandlereinrichtung oder weitere DC/DC-Wandlereinrichtungen als Schaltnetzteile ausgebildet. Die erste DC/DC-Wandlereinrichtung weist eine erste in Reihe mit dem ersten Spannungshauptausgang angeordnete Ausgangsinduktivität auf. Die Ausgangsinduktivität dient insbesondere zur temporären Zwischenspeicherung der elektrischen Energie bei einer resonanten Betriebsweise der DC/DC-Wandlereinrichtung.

Die zweite Hauptkanalanordnung weist einen zweiten Spannungseingang für eine zweite Eingangsgleichspannung auf. Vorzugsweise wird die zweite Eingangsgleichspannung von einem Bordnetz des Flugzeugs bereitgestellt. Die zweite Eingangsgleichspannung kann identisch zu der ersten Eingangsgleichspannung sein, sodass erster und zweiter Spannungseingang parallel verschaltet sind. Alternativ und bevorzugt sind die erste und die zweite Eingangsgleichspannung unabhängig voneinander ausgebildet, sodass die Eingangsgleichspannungen zueinander redundant sind. Ferner weist die zweite Hauptkanalanordnung einen zweiten Spannungshauptausgang für eine zweite Ausgangsgleichspannung auf. Die zweite Ausgangsgleichspannung bildet eine zweite Versorgungsspannung. Die zweite Hauptkanalanordnung weist eine zweite DC/DC-Wandlereinrichtung zur Wandlung der zweiten Eingangsgleichspannung in die zweite Ausgangsgleichspannung auf. Für die Ausgestaltung der zweiten DC/DC-Wandlereinrichtung wird auf die Varianten der ersten DC/DC-Wandlereinrichtung verwiesen. Die zweite DC/DC-Wandlereinrichtung umfasst eine zweite in Reihe mit dem zweiten Spannungshauptausgang angeordnete Ausgangsinduktivität. Die zweite Ausgangsinduktivität dient insbesondere zur temporären Speicherung von elektrischer Energie bei einem resonanten Betrieb der DC/DC-Wandlereinrichtung.

Somit weist die Spannungsversorgungsvorrichtung mit der ersten und mit der zweiten Hauptkanalanordnung zwei voneinander vorzugsweise unabhängige Kanäle auf, sodass die beiden Kanäle zueinander redundant sind.

Im Rahmen der Erfindung wird vorgeschlagen, dass die Spannungsversorgungsvorrichtung einen ersten und einen zweiten Ausgangstransformator aufweist. Die erste Ausgangsinduktivität ist als eine Primärwicklung des ersten Ausgangstransformators und die zweite Ausgangsinduktivität als eine Primärwicklung des zweiten Ausgangstransformators ausgebildet. Prinzipiell ist es bekannt, die Ausgangsinduktivitäten als Spulen umzusetzen, die Umsetzung als Primärwicklung eines Ausgangstransformators bildet von der elektrischen Funktion betrachtet jedoch eine gleichwertige Alternative.

Ferner weist die Spannungsversorgungsvorrichtung mindestens eine erste Nebenkanalanordnung auf, wobei die erste Nebenkanalanordnung einen ersten Spannungsnebenausgang zur Ausgabe einer ersten Nebenausgangsgleichspannung aufweist, wobei die erste Nebenausgangsgleichspannung eine dritte Versorgungsspannung bildet. Eine erste Sekundärwicklung des ersten Ausgangstransformators und eine erste Sekundärwicklung des zweiten Ausgangstransformators sind zueinander parallel geschalten, wobei der erste Spannungsnebenausgang mit den parallel geschalteten ersten Sekundärwicklungen verbunden ist. Somit sind jeweils ein Ausgang der ersten Sekundärwicklungen miteinander verbunden und in Reihe mit dem ersten Spannungsnebenausgang geschalten. Die jeweils zweiten Ausgänge der Sekundärwicklung sind vorzugsweise auf Masse gelegt.

Durch die beiden Ausgangstransformatoren wird elektrische Energie von den Primärwicklungen auf die Sekundärwicklungen übertragen. Durch das Parallelschalten der Sekundärwicklungen wird erreicht, dass die erste Nebenkanalanordnung stets die erste Nebenausgangsgleichspannung liefern kann für den Fall, dass beide Hauptkanalanordnungen mit einer Eingangsgleichspannung versehen sind oder betriebsbereit sind oder dass die erste Nebenausgangsgleichspannung bereitgestellt wird, wenn eine der Hauptkanalanordnungen ausfällt. Dadurch, dass die beiden Sekundärwicklungen parallel zueinander geschalten sind, ergibt sich keine Spannungsänderung an der ersten Nebenausgangsgleichspannung bei dem Ausfall einer der Hauptkanalanordnungen. Damit ist die erste Nebenkanalanordnung störsicher ausgebildet, da diese die Nebenausgangsgleichspannung liefert, wenn nur mindestens oder genau eine der Hauptkanalanordnungen in Betrieb ist.

Durch die galvanische Entkopplung zwischen der Nebenkanalanordnung und der ersten und der zweiten Hauptkanalanordnung wird ferner erreicht, dass die erste Nebenkanalanordnung auch dann nicht gestört wird, wenn bei einer der Hauptkanalanordnungen ein Kurzschluss auftritt. Im Gegenzug gilt das Gleiche, wenn in der Nebenkanalanordnung ein Kurzschluss auftritt, so beeinträchtigt dieser Kurzschluss die Funktion der Hauptkanalanordnungen nicht so stark, dass diese ebenfalls ausfallen würden.

Bei einer bevorzugten Ausgestaltung der Erfindung ist vorgesehen, dass die erste Sekundärwicklung des ersten Ausgangstransformators und/oder die erste Sekundärwicklung des zweiten Ausgangstransformators magnetisch lose mit dem jeweiligen Ausgangstransformator und/oder mit der jeweiligen Primärwicklung gekoppelt sind. Insbesondere ist ein Kopplungsfaktor k < 0,9, im Speziellen < 0,5 ausgebildet. Durch die magnetisch lose Kopplung zwischen erster Sekundärwicklung des ersten Ausgangstransformators und dessen Primärwicklung und/oder der ersten Sekundärwicklung des zweiten Ausgangstransformators und dessen Primärwicklung wird die Kurzschlussfestigkeit der Spannungsversorgungsvorrichtung verbessert.

Bei einer bevorzugten Weiterbildung der Erfindung weist die erste Sekundärwicklung des ersten Ausgangstransformators und/oder die erste Sekundärwicklung des zweiten Ausgangstransformators einen Luftspalt auf. Damit verhalten sich die Sekundärwicklungen wie Quellwiderstände, welche aufgrund des Luftspalts im Kern bei einer dynamischen Belastung einen hohen Widerstand aufweisen. Durch das dynamische Verhalten der Sekundärwindungen als Quellwiderstände wird erreicht, dass ein Kurzschlussstrom durch die Sekundärwindungen auf einen maximalen Wert begrenzt ist. Da der Strom aber einen hohen induktiven Anteil hat, wird kaum Verlustleistung generiert. Die Stromaufnahme der zugehörigen DC/DC-Wandlereinrichtung wird damit selbsttätig während des Kurzschlusses reduziert, die anderen Ausgänge sind nicht betroffen.

Insbesondere ist der dynamische Widerstand größer als der statische Widerstand der Sekundärwicklung.

Bei einer bevorzugten konstruktiven Ausgestaltung der Erfindung sind der erste und/oder der zweite Ausgangstransformator mit einem E-Kern ausgestattet, wobei der E-Kern einen Mittelsteg und mindestens einen Seitensteg aufweist. Bevorzugt weist der E-Kern einen Mittelsteg und zwei Seitenstege auf. Die Primärwicklung ist auf dem Mittelsteg angeordnet, die Sekundärwicklung weist einen ersten Sekundärwickelabschnitt, der auf dem Mittelsteg angeordnet ist und einen zweiten Sekundärwickelabschnitt auf, der auf dem Seitensteg angeordnet ist. Durch die Zweiteilung der Sekundärwicklung wird der zuvor beschriebene Luftspalt ausgebildet, der die Kurzschlussfestigkeit der Spannungsversorgung in dem jeweiligen Ausgangstransformator verbessert.

Bei einer bevorzugten Weiterbildung der Erfindung weist die Spannungsversorgungsvorrichtung eine zweite Nebenkanalanordnung auf, wobei die zweite Nebenkanalanordnung einen zweiten Spannungsnebenausgang mit einer zweiten Nebenausgangsgleichspannung als vierte Versorgungsspannung versorgt. Eine zweite Sekundärwicklung des ersten Ausgangstransformators sowie eine zweite Sekundärwicklung des zweiten Ausgangstransformators sind parallel zueinander geschaltet, wobei der zweite Spannungsnebenausgang mit den parallel geschalteten, zweiten Sekundärwicklungen verbunden ist. Somit ist die zweite Nebenkanalanordnung analog zu der ersten Nebenkanalanordnung ausgebildet, wobei in Bezug auf bevorzugte Ausführungsformen oder mögliche Varianten der zweiten Nebenkanalanordnung auf die Beschreibung der ersten Nebenkanalanordnung verwiesen wird.

Bei einer bevorzugten schaltungstechnischen Ausgestaltung sind dem ersten Spannungsnebenausgang eine erste Diodeneinrichtung und/oder dem zweiten Spannungsnebenausgang eine zweite Diodeneinrichtung vorgeschaltet. Die Diodeneinrichtungen dienen dazu, nur einen Gleichspannungsanteil zu den Spannungsnebenausgängen zu lassen.

Für eine Verringerung der Welligkeit der Nebenausgangsgleichspannungen ist vorgesehen, dass der erste Spannungsnebenausgang über eine erste Kondensatoreinrichtung und/oder dass der zweite Spannungsnebenausgang über eine zweite Kondensatoreinrichtung mit Masse verbunden ist. Die Kondensatoreinrichtungen arbeiten als temporäre Energiespeicher, sodass aufgrund der Schaltvorgänge in der Spannungsversorgungsvorrichtung gebildete Schwingungen ausgefiltert werden.

Bei einer bevorzugten Realisierung der Erfindung ist mindestens eine, vorzugsweise beide DC/DC-Wandlereinrichtungen, als eine Eintaktflusswandlereinrichtung ausgebildet. Eine derartige Eintaktflusswandlereinrichtung weist einen ersten beziehungsweise zweiten Zwischentransformator auf, wobei an der Primärseite des Zwischentransformators ein Eingangskreis und an der Sekundärseite des Zwischentransformators ein Ausgangskreis angeordnet ist. Der Eingangskreis umfasst den ersten beziehungsweise zweiten Spannungseingang, die Primärwicklung des ersten beziehungsweise des zweiten Zwischentransformators sowie eine erste beziehungsweise zweite Schalteinrichtung, die den Eingangskreis in Abhängigkeit eines Steuersignals, insbesondere in Abhängigkeit eines pulsweitenmodulierten Steuersignals, unterbricht. Der Ausgangskreis umfasst eine Sekundärwicklung des ersten beziehungsweise zweiten Zwischentransformators, einen Gleichrichterbereich sowie die erste beziehungsweise zweite Ausgangsinduktivität.

Ein weiterer Gegenstand der Erfindung betrifft eine Flugzeugkontrollanlage mit der Spannungsversorgungsvorrichtung wie diese zuvor beschrieben wurde beziehungsweise nach einem der vorhergehenden Ansprüche. Die Flugzeugkontrollanlage umfasst ein Versorgungsnetz, wobei das Versorgungsnetz die erste Eingangsgleichspannung und die zweite Eingangsgleichspannung bereitstellt und an die Spannungsversorgungsvorrichtung an den ersten beziehungsweise zweiten Spannungseingang übergibt. Vorzugsweise sind die erste Eingangsgleichspannung und die zweite Eingangsgleichspannung unabhängig voneinander ausgebildet. Ferner umfasst die Flugzeugkontrollanlage einen Flugzeugkontrollrechner als eine Flugzeugkontrolleinrichtung, welcher von der Spannungsversorgungsvorrichtung mit einer oder mehreren Versorgungsspannungen versorgt wird.

Ein weiterer Gegenstand der Erfindung betrifft ein Verfahren zum Testen der Spannungsversorgungsvorrichtung und/oder der Flugzeugkontrollanlage wie diese zuvor beschrieben wurde beziehungsweise nach einem der vorhergehenden Ansprüche, wobei in einem ersten Schritt die erste Eingangsgleichspannung deaktiviert und die zweite Eingangsgleichspannung aktiviert und geprüft wird, ob an dem ersten und/oder an dem zweiten Spannungsnebenausgang eine Versorgungsspannung anliegt, nachfolgend wird die erste Eingangsgleichspannung aktiviert und die zweite Eingangsgleichspannung deaktiviert und ebenfalls geprüft, ob an den Spannungsnebenausgängen eine Versorgungsspannung anliegt.

Der Vorteil der zuvor beschriebenen Spannungsversorgungsvorrichtung liegt zum einen darin, dass von dem prinzipiellen Aufbau zumindest die Spannungsnebenausgänge redundant ausgelegt sind, sodass diese betriebsbereit bleiben, sogar wenn eine beliebige der Eingangsgleichspannungen ausfällt.

Ferner ist die Spannungsversorgungsvorrichtung insbesondere durch die magnetisch lose Kopplung und/oder die Ausgestaltung mit dem Luftspalt und/oder die Ausgestaltung mit den zwei Sekundärwickelabschnitten kurzschlussfest, da ein Kurzschluss an einem beliebigen der Ausgänge, insbesondere der Spannungshauptausgänge und der Spannungsnebenausgänge, die verbleibenden Ausgänge nicht beeinträchtigt. Zudem kann die redundante Spannungsversorgungsvorrichtung mit wenigen Bauteilen und insbesondere ohne aufwendige Überwachungselektronik ausgeführt werden. Nicht zuletzt ist ein Vorteil darin zu sehen, dass die Funktionsfähigkeit der Spannungsnebenausgänge getestet werden kann, ohne die Spannungsnebenausgänge zu deaktivieren.

Weitere Merkmale, Vorteile und Wirkungen der Erfindung ergeben sich aus der Beschreibung eines bevorzugten Ausführungsbeispiels der Erfindung sowie der beigefügten Figuren. Dabei zeigen:
Figur 1 ein schematisches Blockdiagramm einer Flugzeugkontrollanlage mit einer Spannungsversorgungsvorrichtung als ein Ausführungsbeispiel der Erfindung;
Figur 2 eine schematische Prinzipdarstellung der Spannungsversorgungsvorrichtung in der Figur 1;
Figur 3 einen schematischen Schnitt durch einen der Ausgangstransformatoren zur Beschreibung der Primärwicklung und Sekundärwicklung in dem Ausgangstransformator.

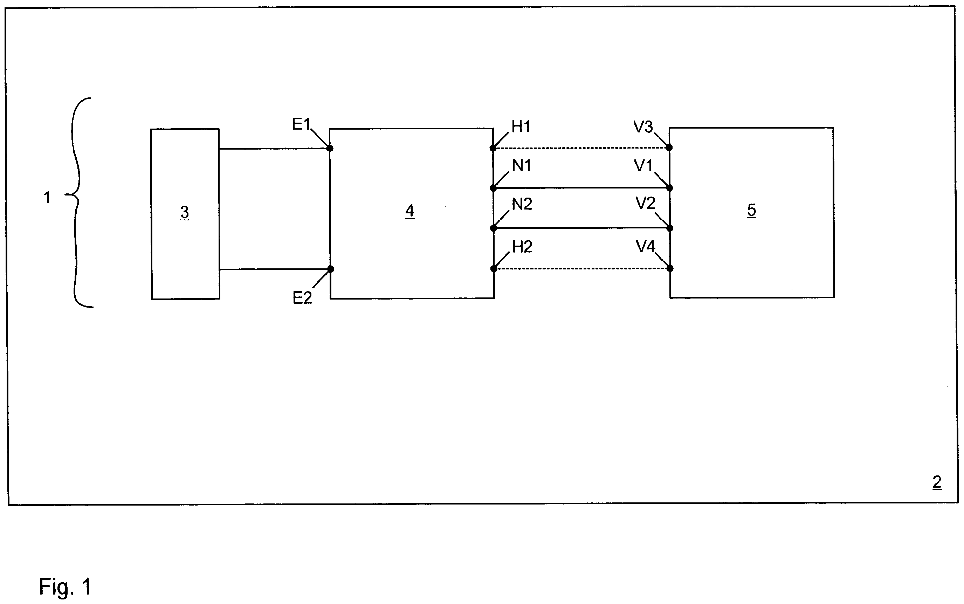

Die Figur 1 zeigt in einer schematischen Blockdarstellung eine Flugzeugkontrollanlage 1 für ein Flugzeug 2. Die Flugzeugkontrollanlage 1 umfasst ein Bordnetz 3, eine Spannungsversorgungsvorrichtung 4 sowie eine Flugzeugkontrolleinrichtung 5. Das Bordnetz 3 stellt zwei Eingangsspannungen für einen ersten Spannungseingang E1 und einen zweiten Spannungseingang E2 der Spannungsversorgungsvorrichtung 4 bereit. Die Eingangsspannungen sind als Eingangsgleichspannungen ausgebildet. Die Spannungsversorgungsvorrichtung 4 wandelt die Eingangsspannungen und stellt an Ausgängen der Spannungsversorgungsvorrichtung 4 insgesamt vier Versorgungsspannungen bereit. Genauer betrachtet gibt es einen ersten Spannungshauptausgang H1, einen zweiten Spannungshauptausgang H2, einen ersten Spannungsnebenausgang N1 und einen zweiten Spannungsnebenausgang N2.

Die Flugzeugkontrolleinrichtung 5 weist dazu passend mindestens zwei Versorgungseingänge V1 und V2 sowie gegebenenfalls weitere Versorgungseingänge V3 und V4 auf, wobei jedoch mindestens eine Versorgungsspannung von den Ausgängen H1, H2, N1, N2 zur Versorgung der Flugzeugkontrolleinrichtung 5 genutzt wird. In dem vorliegenden Beispiel sind die Nebenspannungsausgänge N1 und N2 mit den Versorgungseingängen V1 und V2 verbunden. Die Flugzeugkontrolleinrichtung 5 ist z.B. als ein Flugzeugkontrollrechner ausgebildet und wird insbesondere bei der Steuerung des Flugzeugs 2 verwendet.

Die Flugzeugkontrollanlage 1 ist derart ausgebildet, dass bei dem Ausfall von einer Teilkomponente immer noch die Spannungsversorgung der Flugzeugkontrolleinrichtung 5 mit mindestens einer Versorgungsspannung sichergestellt ist. Somit ist die Spannungsversorgungsvorrichtung 4 so aufgebaut, dass eine der Eingangsspannungen ausfallen könnte und die Flugzeugkontrolleinrichtung 5 trotzdem noch mit einer Versorgungsspannung versorgt wäre.

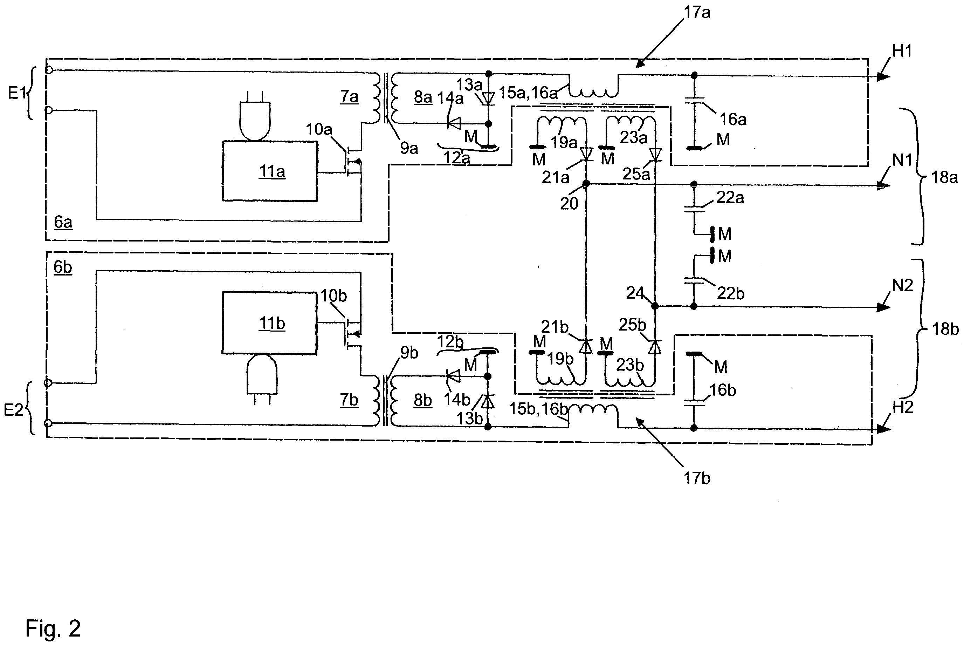

Die Figur 2 zeigt stark schematisiert die Spannungsversorgungsvorrichtung 4 mit dem ersten Spannungshaupteingang E1 und dem zweiten Spannungshaupteingang E2. Ferner sind die zwei Spannungshauptausgänge H1 und H2 sowie die Spannungsnebenausgänge N1 und N2 dargestellt.

Strukturell betrachtet weist die Spannungsversorgungsvorrichtung 4 eine erste Hauptkanalanordnung 6a und eine zweite Hauptkanalanordnung 6b auf. Die erste Hauptkanalanordnung 6a wird durch die Umsetzung der ersten Eingangsgleichspannung am ersten Spannungseingang E1 zu der ersten Ausgangsgleichspannung an dem ersten Spannungshauptausgang H1 gebildet. Die zweite Hauptkanalanordnung 6b wird durch die Umsetzung der zweiten Eingangsgleichspannung an dem zweiten Spannungseingang E2 zu der zweiten Ausgangsgleichspannung an dem zweiten Spannungshauptausgang H2 gebildet. Die erste Hauptkanalanordnung 6a und die zweite Hauptkanalanordnung 6b sind jeweils gleich ausgebildet, sodass im Folgenden nur die erste Hauptkanalanordnung 6a beschrieben wird.

Die erste Hauptkanalanordnung 6a weist einen ersten Eingangskreis 7a und einen ersten Ausgangskreis 8a auf. Der erste Eingangskreis 7a und der erste Ausgangskreis 8a sind über einen ersten Zwischentransformator 9a miteinander gekoppelt. In dem ersten Eingangskreis 7a befindet sich in Reihe mit einer Primärwicklung des ersten Zwischentransformators 9a eine Schalteinrichtung 10a, welche zum Beispiel als ein Transistor, insbesondere als ein Hochleistungstransistor, ausgebildet wird. Die Schalteinrichtung 10a wird über eine Steuereinrichtung 11a angesteuert. Beispielsweise wird die Schalteinrichtung 10a über ein pulsweitenmoduliertes Signal angesteuert.

Der erste Ausgangskreis 8a weist eine Sekundärwicklung an dem ersten Zwischentransformator 9a auf. Nachfolgend ist eine Diodenanordnung 12a vorgesehen, wobei ein erster Ausgang der Sekundärwicklung des Zwischentransformators 9a mit einer ersten Diode 13a in Durchlassrichtung auf Masse geführt ist und der zweite Ausgang der Sekundärwicklung des Zwischentransformators 9a über eine zweite Diode 14a in Sperrrichtung ebenfalls auf Masse geführt ist. Weitergehend von dem ersten Ausgang der Sekundärwicklung des ersten Zwischentransformators 9a ist eine Ausgangsinduktivität 15a angeordnet, welche als ein temporärer Energiespeicher wirkt.

Die erste Ausgangsinduktivität 15a ist in Reihe mit dem ersten Spannungshauptausgang H1 geschalten. Zur Glättung der ersten Ausgangsgleichspannung ist zudem eine erste Kondensatorvorrichtung 16a vorgesehen, über die der erste Spannungshauptausgang H1 mit der Masse M verbunden ist.

Die zweite Hauptkanalanordnung 6b ist identisch aufgebaut, wobei die jeweiligen Komponenten jedoch jeweils mit dem Buchstaben "b" bezeichnet sind.

Die erste Ausgangsinduktivität 15a ist durch eine Primärwicklung 16a eines ersten Ausgangstransformators 17a dargestellt. Die zweite Ausgangsinduktivität 15b ist durch eine Primärwicklung 16b eines zweiten Ausgangstransformators 17b dargestellt.

Ferner weist die Spannungsversorgungsvorrichtung 4 eine erste Nebenkanalanordnung 18a und eine zweite Nebenkanalanordnung 18b auf. Der erste Spannungsnebenausgang N1 ist der ersten Nebenkanalanordnung 18a und der zweite Spannungsnebenausgang N2 ist der zweiten Nebenkanalanordnung 18b zugeordnet.

Die erste Nebenkanalanordnung 18a umfasst eine erste Sekundärwicklung 19a des ersten Ausgangstransformators 17a sowie eine erste Sekundärwicklung 19b des zweiten Ausgangstransformators 17b. Mit einem Ende sind die ersten Sekundärwicklungen 19a, b mit der Masse M verbunden. Mit dem zweiten Ausgang sind die ersten Sekundärwicklungen 19a, b in einem Knotenpunkt 20 zusammengeschaltet, wobei der Knotenpunkt 20 in Reihe mit dem ersten Spannungsnebenausgang N1 liegt. Damit sind die ersten Sekundärwicklungen 19a, b parallel zueinander angeordnet. Vor dem Knotenpunkt 20 ist jeweils eine Diodeneinrichtung 21a, 21b in Durchlassrichtung zwischen den ersten Sekundärwicklungen 19a, b und dem Knotenpunkt 20 geschalten.

Der Nebenkanalausgang N1 ist über eine Kondensatoreinrichtung 22a mit der Masse M verbunden, um die erste Nebenausgangsgleichspannung zu glätten.

Die zweite Nebenkanalanordnung 18b wird durch eine zweite Sekundärwicklung 23a des ersten Ausgangstransformators 17a und durch eine zweite Sekundärwicklung 23b des zweiten Ausgangstransformators 17b gebildet. Jeweils ein Ausgang der zweiten Sekundärwicklungen 23a, b ist mit Masse M verbunden. Die jeweils anderen Ausgänge sind über einen Knotenpunkt 24 mit dem zweiten Spannungsnebenausgang N2 verbunden. Vor dem zweiten Knotenpunkt 24 sind jeweils eine Diode 25a, b in Durchlassrichtung geschalten, sodass nur der Gleichspannungsanteil zu dem zweiten Spannungsnebenausgang N2 durchgelassen wird.

Der zweite Spannungsnebenausgang N2 ist über eine Kondensatoreinrichtung 22b mit der Masse M verbunden, um die Nebenausgangsgleichspannung zu glätten.

Die erste und die zweite Sekundärwicklung 19a, 23a am ersten Ausgangstransformator 17a sind galvanisch voneinander entkoppelt. Ebenso sind die erste Sekundärwicklung 19b und die zweite Sekundärwicklung 23b am zweiten Ausgangstransformator 17b galvanisch voneinander entkoppelt. Ferner sind die erste und die zweite Sekundärwicklung 19a, 23a von der Primärwicklung des ersten Ausgangstransformators 17a galvanisch entkoppelt. Zudem sind die erste Sekundärwicklung 19b und die zweite Sekundärwicklung 23b von der Primärwicklung des zweiten Ausgangstransformators 17b galvanisch entkoppelt.

Mit dem gezeigten Aufbau werden die Spannungsnebenausgänge N1, N2 jeweils von beiden Ausgangstransformatoren 17a, b mit elektrischer Energie versorgt. Dadurch, dass die Sekundärwicklungen 19a,b; 23a,b jeweils elektrisch parallel zueinander in der jeweiligen Nebenkanalanordnung 18a, b angeordnet sind, kann jeweils eine der Sekundärwicklungen 19a, 23a beziehungsweise 19b, 23b ausfallen, ohne dass dies zu einem Ausfall der Nebenkanalanordnung 18a oder 18b führen würde. Damit sind die Nebenkanalanordnungen 18a, b ausfallsicher und/oder redundant ausgeführt.

Über den ersten Ausgangstransformator 17a sind die Primärwicklung 16a und die Sekundärwicklung 19a, 23a nur lose miteinander gekoppelt. In gleicher Weise sind bei dem zweiten Ausgangstransformator 17b die Primärwicklung mit der ersten Sekundärwicklung 19b und der zweiten Sekundärwicklung 23b nur lose gekoppelt. Durch die lose Kopplung wird erreicht, dass ein Kurzschluss in einem der Ausgänge H1, H2, N1, N2 nicht zu einer zu großen Beeinträchtigung der anderen Kanäle führen würde.

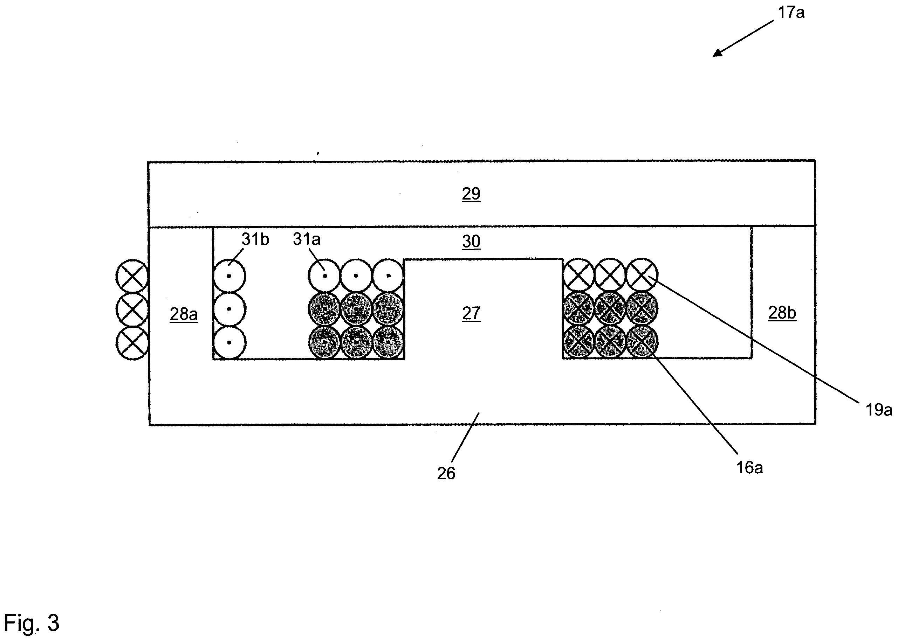

Diese Kurzschlussfestigkeit wird weiter durch die spezielle Wicklung oder Windungsanordnung in den Ausgangstransformatoren 17a, b erreicht. Beispielhaft ist in der Figur 3 ein schematischer Querschnitt durch den Ausgangstransformator 17a dargestellt. Der Ausgangstransformator 17b ist gleich aufgebaut. In der Figur 3 ist zum einen die Primärwicklung 16a und zum anderen die Sekundärwicklung 19a gezeigt. Die Primärwicklung 16a ist schattiert oder dunkel, die Sekundärwicklung 19a ist dagegen weiß dargestellt. Der Ausgangstransformator 17a weist einen Kern 26 auf, welcher als ein E-Kern ausgebildet ist. Der Kern 26 umfasst einen Mittelsteg 27 und zwei Seitenstege 28a, b auf. Ferner ist der Kern 26 durch einen I-Querträger 29 abgedeckt, wobei jedoch zwischen dem Mittelsteg 27 und dem I-Querträger 29 ein Luftspalt 30 vorgesehen ist.

Die Primärwicklung 16a ist um den Mittelsteg 27 gewickelt. Die Sekundärwicklung 19a in diesem Beispiel teilt sich in zwei Abschnitte, nämlich in einen ersten Sekundärwickelabschnitt 31a auf, welcher ebenfalls um den Mittelsteg 27 gewickelt ist sowie in einen zweiten Sekundärwickelabschnitt 31b, welcher um einen der zwei Seitenstege, in diesem Beispiel 28a, gewickelt ist.

Diese spezielle Wicklung führt zu einer inhärenten Überlastfestigkeit des Ausgangstransformators 17a. Dadurch, dass die Primärwicklung 16 a um den Mittelsteg 27 gewickelt ist und die Sekundärwicklung 19a sich auf den ersten Sekundärwickelabschnitt 31a und den zweiten Sekundärwickelabschnitt 31b aufteilt, wobei der erste Sekundärwickelabschnitt 31a ebenfalls um den Mittelsteg 27 und der zweite Sekundärwickelabschnitt 31 b um den Seitensteg 28b gewickelt ist, wird es dem magnetischen Fluss im Kern 26 ermöglicht, einen Ausweichpfad bei steigender Belastung der Sekundärwicklung 19a umzusetzen. Dieser Aufbau verhält sich wie ein Quellwiderstand, der aber aufgrund des Luftspalts 30 im Kern 26 hauptsächlich induktiv ist. Somit wird der Kurzschlussstrom auf einen maximalen Wert begrenzt. Da der Strom aber einen hohen induktiven Anteil hat, wird kaum Verlustleistung generiert. Die Stromaufnahme des dazugehörigen Hauptkanalanordnung 6a reduziert sich automatisch während des Kurzschlusses. Die anderen Ausgänge sind nicht betroffen.

Somit hat die Spannungsversorgungsvorrichtung 4 den Vorteil, dass die beiden Spannungsnebenausgänge N1 und N2 über eine spezielle Wicklungs-, insbesondere Windungsanordnung, mit beiden Hauptspannungseingängen E1, E2 gekoppelt und demnach redundant ausgeführt sind. Durch die spezielle Wicklungsanordnung sind sie auch unabhängig zueinander. Das heißt, ein Kurzschluss im Spannungsnebenausgang N1 hat einen Einfluss auf die anderen Ausgänge. Es werden keine zusätzlichen Komponenten benötigt, um diese Unabhängigkeit zu erreichen. Um den Ausfall in einer Diode 21a, 21b, 25a, 25b in den Nebenkoppelanordnungen 18a, b zu erkennen, können die Hauptkanalanordnungen 6a, b, insbesondere deren Spannungsversorgung, einzeln abgeschaltet werden. Dieses Vorgehen erlaubt ein Testen der Versorgungsspannungsvorrichtung 4 und damit der Flugzeugkontrollanlage 1 auch während des Betriebs der Flugzeugkontrollanlage 1.

### Bezugszeichenliste

- 1: Flugzeugkontrollanlage
- 2: Flugzeug
- 3: Bordnetz
- 4: Spannungsversorgungsvorrichtung
- 5: Flugzeugkontrolleinrichtung
- 6a, b: Hauptkanalanordnung
- 7a,b: Eingangskreis
- 8a,b: Ausgangskreis
- 9a,b: Zwischentransformator
- 10a,b: Schalteinrichtung
- 11a,b: Steuereinrichtung
- 12a,b: Diodenanordnung
- 13a,b: erste Diode
- 14a,b: zweite Diode
- 15a, b: Ausgangsinduktivitäten
- 16a,b: Kondensatorvorrichtung
- 16a, b: Primärwicklungen
- 17a, b: Ausgangstransformatoren
- 18a, b: Nebenkanalanordnungen
- 19a, b: erste Sekundärwicklungen
- 20: Knotenpunkt
- 21a, b: Diodeneinrichtung
- 22a, b: Kondensatoreinrichtungen
- 23a, b: zweite Sekundärwicklungen
- 24: Knotenpunkt
- 25a, b: Dioden
- 26: Kern
- 27: Mittelsteg
- 28a, b: Seitenstege
- 29: I-Querträger
- 30: Luftspalt
- 31a, b: Sekundärwickelabschnitte
- E1, E2: Spannungseingänge
- H1, H2: Spannungshauptausgänge
- N1, N2: Spannungsnebenausgänge
- V1-V4: Versorgungseingänge
- M: Masse

## Patentansprüche

1. Spannungsversorgungsvorrichtung (4)
mit einer ersten und mit einer zweiten Hauptkanalanordnung (6a,b),
wobei die erste Hauptkanalanordnung (6a) einen ersten Spannungseingang (E1) für eine erste Eingangsgleichspannung und einen ersten Spannungshauptausgang (H1) für eine erste Ausgangsgleichspannung aufweist, wobei die erste Hauptkanalanordnung (6a) eine erste DC/DC-Wandlereinrichtung zur Wandlung der ersten Eingangsgleichspannung in die erste Ausgangsgleichspannung aufweist, wobei die erste DC/DC-Wandlereinrichtung eine erste in Reihe mit dem ersten Spannungshauptausgang (H1) angeordnete Ausgangsinduktivität (15a) aufweist,
wobei die zweite Hauptkanalanordnung (6b) einen zweiten Spannungseingang (E2) für eine zweite Eingangsgleichspannung und einen zweiten Spannungshauptausgang (H2) für eine zweite Ausgangsgleichspannung aufweist, wobei die zweite Hauptkanalanordnung (6b) eine zweite DC/DC-Wandlereinrichtung zur Wandlung der zweiten Eingangsgleichspannung in die zweite Ausgangsgleichspannung aufweist, wobei die zweite DC/DC-Wandlereinrichtung eine zweite in Reihe mit dem zweiten Spannungshauptausgang (H2) angeordnete zweite Ausgangsinduktivität (15b) aufweist,
**dadurch gekennzeichnet, dass**
die Spannungsversorgungsvorrichtung (4) einen ersten und einen zweiten Ausgangstransformator (17a,b) aufweist, wobei die erste Ausgangsinduktivität (15a) als eine Primärwicklung (16a) des ersten Ausgangstransformators (17a) und die zweite Ausgangsinduktivität (15b) als eine Primärwicklung (16b) des zweiten Ausgangstransformator (17b) ausgebildet ist,
und dass die Spannungsversorgungsvorrichtung (4) mindestens eine erste Nebenkanalanordnung (18a) aufweist, wobei die erste Nebenkanalanordnung (18a) einen ersten Spannungsnebenausgang (N1) sowie eine erste Sekundärwicklung (19a) des ersten Ausgangstransformators (17a) und eine erste Sekundärwicklung (19b) des zweiten Ausgangstransformators (17b) aufweist, wobei der erste Spannungsnebenausgang (N1) mit den parallel geschalteten ersten Sekundärwicklungen (19a,b) verbunden ist,
wobei die ersten Sekundärwicklungen (19a, b) dadurch parallel zueinander angeordnet sind, dass sie mit einem Ende mit einer Masse (M) verbunden sind und mit dem zweiten Ausgang in einem Knotenpunkt (20) zusammengeschaltet sind, wobei der Knotenpunkt (20) in Reihe mit dem ersten Spannungsnebenausgang (N1) liegt.

2. Spannungsversorgungsvorrichtung (4) nach Anspruch 1, **dadurch gekennzeichnet, dass** die erste Sekundärwicklung (19a) des ersten Ausgangstransformators (17a) mit dessen Primärwicklung (16a) und/oder die erste Sekundärwicklung (19b) des zweiten Ausgangstransformators (17b) mit dessen Primärwicklung (16b) magnetisch lose gekoppelt ist und/oder dass die zweite Sekundärwicklung (23a) des ersten Ausgangstransformators (17a) mit dessen Primärwicklung (16a) und/oder die zweite Sekundärwicklung (23b) des zweiten Ausgangstransformators (17b) mit dessen Primärwicklung (16b) magnetisch lose gekoppelt ist.

3. Spannungsversorgungsvorrichtung (4) nach Anspruch 1 oder 2, **dadurch gekennzeichnet, dass** die erste Sekundärwicklung (19a) des ersten Ausgangstransformators (17a) und/oder die erste Sekundärwicklung (19b) des zweiten Ausgangstransformators (17b) einen Luftspalt aufweisen und/oder dass die zweite Sekundärwicklung (23a) des ersten Ausgangstransformators (17a) und/oder die zweite Sekundärwicklung (23b) des zweiten Ausgangstransformators (17b) einen Luftspalt aufweisen.

4. Spannungsversorgungsvorrichtung (4) nach einem der vorhergehenden Ansprüche, **dadurch gekennzeichnet, dass** der erste und/oder der zweite Ausgangstransformator (17a,b) einen E-Kern (26) mit einem Mittelsteg (27) und mindestens einem Seitensteg (28a,b) aufweisen, wobei die Primärwicklung (16a,b) auf dem Mittelsteg (27) angeordnet ist und wobei die Sekundärwicklung (19a,b,23a,b) einen ersten Sekundärwickelabschnitt (31a), der auf dem Mittelsteg (27) angeordnet ist, und einen zweiten Sekundärwickelabschnitt (31b) aufweist, der auf dem Seitensteg (28a) angeordnet ist.

5. Spannungsversorgungsvorrichtung (4) nach einem der vorhergehenden Ansprüche, **dadurch gekennzeichnet, dass** die Spannungsversorgungsvorrichtung (4) eine zweite Nebenkanalanordnung (18b) aufweist, wobei die zweite Nebenkanalanordnung (18b) einen zweiten Spannungsnebenausgang (N2) sowie eine zweite Sekundärwicklung (23a) des ersten Ausgangstransformators (17a) und eine zweite Sekundärwicklung (23b) des zweiten Ausgangstransformators (17b) aufweist, wobei der zweite Spannungsnebenausgang (N2) mit den parallel geschalteten zweiten Sekundärwicklungen (23a,b) verbunden ist.

6. Spannungsversorgungsvorrichtung (4) nach einem der vorhergehenden Ansprüche, **dadurch gekennzeichnet, dass** dem ersten Spannungsnebenausgang (N1) eine erste Diodeneinrichtung (21a,b) und/oder dass dem zweiten Spannungsnebenausgang (N2) eine zweite Diodeneinrichtung (25a,b) vorgeschaltet ist.

7. Spannungsversorgungsvorrichtung (4) nach einem der vorhergehenden Ansprüche, **dadurch gekennzeichnet, dass** der erste Spannungsnebenausgang (N1) über eine erste Kondensatoreinrichtung (22a) und/oder dass der zweite Spannungsnebenausgang (N2) über eine zweite Kondensatoreinrichtung (22b) mit Masse (M) verbunden ist.

8. Spannungsversorgungsvorrichtung (4) nach einem der vorhergehenden Ansprüche, **dadurch gekennzeichnet, dass** die DC/DC-Wandlereinrichtung als eine Eintaktflusswandlereinrichtung ausgebildet ist.

9. Flugzeugsteuerungsanlage (1) mit einer Spannungsversorgungsvorrichtung (4) nach einem der vorhergehenden Ansprüche, mit einem Versorgungsnetz (3), wobei das Versorgungsnetz (3) die erste Eingangsgleichspannung und die zweite Eingangsgleichspannung bereitstellt, mit einer Flugzeugkontrolleinrichtung (5), wobei die Flugzeugkontrolleinrichtung (5) von der Spannungsversorgungsvorrichtung (4) mit mindestens einer Versorgungsspannung versorgt ist.

10. Verfahren zum Testen der Spannungsversorgungsvorrichtung (4) und/oder der Flugzeugsteuerungsanlage (1) nach einem der vorhergehenden Ansprüche, wobei in einem ersten Schritt die erste Eingangsgleichspannung deaktiviert und die zweite Eingangsgleichspannung aktiviert und geprüft wird, ob an dem ersten und/oder an dem zweiten Spannungsnebenausgang (N1,N2) eine Versorgungsspannung anliegt, nachfolgend wird die erste Eingangsgleichspannung aktiviert und die zweite Eingangsgleichspannung deaktiviert und ebenfalls geprüft, ob an den Spannungsnebenausgängen (N1,N2) eine Versorgungsspannung anliegt.

## Claims

1. Voltage supply device (4)
having a first and a second main channel arrangement (6a, b),
wherein the first main channel arrangement (6a) has a first voltage input (E1) for a first input DC voltage and a first main voltage output (H1) for a first output DC voltage, wherein the first main channel arrangement (6a) has a first DC/DC converter device for converting the first input DC voltage into the first output DC voltage, wherein the first DC/DC converter device has a first output inductor (15a) which is arranged in series with the first main voltage output (H1),
wherein the second main channel arrangement (6b) has a second voltage input (E2) for a second input DC voltage and a second main voltage output (H2) for a second output DC voltage, wherein the second main channel arrangement (6b) has a second DC/DC converter device for converting the second input DC voltage into the second output DC voltage, wherein the second DC/DC converter device has a second output inductor (15b) which is arranged in series with the second main voltage output (H2),
**characterized in that**
the voltage supply device (4) has a first and a second output transformer (17a, b), wherein the first output inductor (15a) is designed as a primary winding (16a) of the first output transformer (17a), and the second output inductor (15b) is designed as a primary winding (16b) of the second output transformer (17b);
and **in that** the voltage supply device (4) has at least a first secondary channel arrangement (18a), wherein the first secondary channel arrangement (18a) has a first secondary voltage output (N1) and a first secondary winding (19a) of the first output transformer (17a) and a first secondary winding (19b) of the second output transformer (17b), wherein the first secondary voltage output (N1) is connected to the first secondary windings (19a, b) which are connected in parallel,
wherein the first secondary windings (19a, b) are arranged in parallel with one another by having one end connected to a ground (M) and having their second outputs interconnected at a node (20), the node (20) being in series with the first secondary voltage output (N1).

2. Voltage supply device (4) according to Claim 1, **characterized in that** the first secondary winding (19a) of the first output transformer (17a) is loosely magnetically coupled with its primary winding (16a), and/or the first secondary winding (19b) of the second output transformer (17b) is loosely magnetically coupled with its primary winding (16b), and/or **in that** the second secondary winding (23a) of the first output transformer (17a) is loosely magnetically coupled with its primary winding (16a), and/or the second secondary winding (23b) of the second output transformer (17b) is loosely magnetically coupled with its primary winding (16b) .

3. Voltage supply device (4) according to Claim 1 or 2, **characterized in that** the first secondary winding (19a) of the first output transformer (17a) and/or the first secondary winding (19b) of the second output transformer (17b) have an air gap, and/or **in that** the second secondary winding (23a) of the first output transformer (17a) and/or the second secondary winding (23b) of the second output transformer (17b) have an air gap.

4. Voltage supply device (4) according to one of the preceding claims, **characterized in that** the first and/or second output transformer (17a, b) have an E-core (26) having a center leg (27) and at least one outer leg (28a, b), wherein the primary winding (16a, b) is arranged on the center leg (27), and wherein the secondary winding (19a, b, 23a, b) has a first secondary winding section (31a) which is arranged on the center leg (27), and has a second secondary winding section (31b) which is arranged on the outer leg (28a).

5. Voltage supply device (4) according to one of the preceding claims, **characterized in that** the voltage supply device (4) has a second secondary channel arrangement (18b), wherein the second secondary channel arrangement (18b) has a second secondary voltage output (N2) and a second secondary winding (23a) of the first output transformer (17a) and a second secondary winding (23b) of the second output transformer (17b), wherein the second secondary voltage output (N2) is connected to the second secondary windings (23a, b) which are connected in parallel.

6. Voltage supply device (4) according to one of the preceding claims, **characterized in that** a first diode device (21a, b) is upstream of the first secondary voltage output (N1), and/or a second diode device (25a, b) is upstream of the second secondary voltage output (N2) .

7. Voltage supply device (4) according to one of the preceding claims, **characterized in that** the first secondary voltage output (N1) is connected to ground (M) via a first capacitor device (22a), and/or the second secondary voltage output (N2) is connected to ground (M) via a second capacitor device (22b).

8. Voltage supply device (4) according to one of the preceding claims, **characterized in that** the DC/DC converter device is designed as a single-ended flow converter device.

9. Aircraft control system (1) including a voltage supply device (4) according to one of the preceding claims, having a power supply network (3), wherein the power supply network (3) provides the first input DC voltage and the second input DC voltage; including an aircraft control device (5), wherein the aircraft control device (5) is supplied with at least one supply voltage by the voltage supply device (4).

10. Method for testing the voltage supply device (4) and/or the aircraft control system (1) according to one of the preceding claims, wherein in a first step, the first input DC voltage is deactivated, and the second input DC voltage is activated and tested to determine whether a supply voltage is present at the first and/or at the second secondary voltage output (N1, N2); subsequently, the first input DC voltage is activated, and the second input DC voltage is deactivated and also tested for whether a supply voltage is present at the secondary voltage outputs (N1, N2).

## Revendications

1. Système d'alimentation électrique (4), comprenant un premier et un deuxième arrangement de canal principal (6a, b),
le premier arrangement de canal principal (6a) possédant une première entrée de tension (E1) pour une première tension continue d'entrée et une première sortie principale de tension (H1) pour une première tension continue de sortie, le premier arrangement de canal principal (6a) possédant un premier dispositif convertisseur CC/CC destiné à convertir la première tension continue d'entrée en la première tension continue de sortie, le premier dispositif convertisseur CC/CC possédant une première inductance de sortie (15a) branchée en série avec la première sortie principale de tension (H1),
le deuxième arrangement de canal principal (6b) possédant une deuxième entrée de tension (E2) pour une deuxième tension continue d'entrée et une deuxième sortie principale de tension (H2) pour une deuxième tension continue de sortie, le deuxième arrangement de canal principal (6b) possédant un deuxième dispositif convertisseur CC/CC destiné à convertir la deuxième tension continue d'entrée en la deuxième tension continue de sortie, le deuxième dispositif convertisseur CC/CC possédant une deuxième inductance de sortie (15b) branchée en série avec la deuxième sortie principale de tension (H2),
**caractérisé en ce que**
le système d'alimentation électrique (4) possède un premier et un deuxième transformateur de sortie (17a, b), la première inductance de sortie (15a) étant réalisée sous la forme d'un enroulement primaire (16a) du premier transformateur de sortie (17a) et la deuxième inductance de sortie (15b) sous la forme d'un enroulement primaire (16b) du deuxième transformateur de sortie (17b),
et **en ce que** le système d'alimentation électrique (4) possède au moins un premier arrangement de canal auxiliaire (18a), le premier arrangement de canal auxiliaire (18a) possédant une première sortie auxiliaire de tension (N1) ainsi qu'un premier enroulement secondaire (19a) du premier transformateur de sortie (17a) et un premier enroulement secondaire (19b) du deuxième transformateur de sortie (17b), la première sortie auxiliaire de tension (N1) étant reliée aux premiers enroulements secondaires (19a, b) branchés en parallèle,
les premiers enroulements secondaires (19a, b) étant branchés en parallèle l'un à l'autre de telle sorte qu'ils sont reliés à une masse (M) par une extrémité et sont interconnectés avec la deuxième sortie en un point nodal (20), le point nodal (20) étant branché en série avec la première sortie auxiliaire de tension (N1).

2. Système d'alimentation électrique (4) selon la revendication 1, **caractérisé en ce que** le premier enroulement secondaire (19a) du premier transformateur de sortie (17a) est couplé de manière magnétiquement flottante à son enroulement primaire (16a) et/ou le premier enroulement secondaire (19b) du deuxième transformateur de sortie (17b) à son enroulement primaire (16b) et/ou **en ce que** le deuxième enroulement secondaire (23a) du premier transformateur de sortie (17a) est couplé de manière magnétiquement flottante à son enroulement primaire (16a) et/ou le deuxième enroulement secondaire (23b) du deuxième transformateur de sortie (17b) à son enroulement primaire (16b).

3. Système d'alimentation électrique (4) selon la revendication 1 ou 2, **caractérisé en ce que** le premier enroulement secondaire (19a) du premier transformateur de sortie (17a) et/ou le premier enroulement secondaire (19b) du deuxième transformateur de sortie (17b) possèdent un entrefer et/ou **en ce que** le deuxième enroulement secondaire (23a) du premier transformateur de sortie (17a) et/ou le deuxième enroulement secondaire (23b) du deuxième transformateur de sortie (17b) possèdent un entrefer.

4. Système d'alimentation électrique (4) selon l'une des revendications précédentes, **caractérisé en ce que** le premier et/ou le deuxième transformateur de sortie (17a, b) possèdent un noyau en E (26) ayant une barre centrale (27) et au moins une barre latérale (28a, b), l'enroulement primaire (16a, b) étant disposé sur la barre centrale (27) et l'enroulement secondaire (19a, b, 23a, b) possédant une première portion d'enroulement secondaire (31a) qui est disposée sur la barre centrale (27) et une deuxième portion d'enroulement secondaire (31b) qui est disposée sur la barre latérale (28a).

5. Système d'alimentation électrique (4) selon l'une des revendications précédentes, **caractérisé en ce que** le système d'alimentation électrique (4) possède un deuxième arrangement de canal auxiliaire (18b), le deuxième arrangement de canal auxiliaire (18b) possédant une deuxième sortie auxiliaire de tension (N2) ainsi qu'un deuxième enroulement secondaire (23a) du premier transformateur de sortie (17a) et un deuxième enroulement secondaire (23b) du deuxième transformateur de sortie (17b), la deuxième sortie auxiliaire de tension (N2) étant reliée aux deuxièmes enroulements secondaires (23a, b) branchés en parallèle.

6. Système d'alimentation électrique (4) selon l'une des revendications précédentes, **caractérisé en ce qu'**un premier dispositif à diodes (21a, b) est branché en amont de la première sortie auxiliaire de tension (N1) et/ou **en ce qu'**un deuxième dispositif à diodes (25a, b) est branché en amont de la deuxième sortie auxiliaire de tension (N2).

7. Système d'alimentation électrique (4) selon l'une des revendications précédentes, **caractérisé en ce que** la première sortie auxiliaire de tension (N1) est reliée à la masse (M) par le biais d'un premier dispositif à condensateur (22a) et/ou **en ce que** la deuxième sortie auxiliaire de tension (N2) est reliée à la masse (M) par le biais d'un deuxième dispositif à condensateur (22b).

8. Système d'alimentation électrique (4) selon l'une des revendications précédentes, **caractérisé en ce que** le dispositif convertisseur CC/CC est réalisé sous la forme d'un dispositif convertisseur direct à simple alternance.

9. Équipement de commande d'aéronef (1) comprenant un système d'alimentation électrique (4) selon l'une des revendications précédentes, comprenant un réseau d'alimentation (3), le réseau d'alimentation (3) fournissant la première tension continue d'entrée et la deuxième tension continue d'entrée, comprenant un dispositif de contrôle d'aéronef (5), le dispositif de contrôle d'aéronef (5) étant alimenté par le système d'alimentation électrique (4) avec au moins une tension d'alimentation.

10. Procédé pour tester le système d'alimentation électrique (4) et/ou l'équipement de commande d'aéronef (1) selon l'une des revendications précédentes, selon lequel, dans une première étape, la première tension continue d'entrée est désactivée et la deuxième tension continue d'entrée est activée, et un contrôle est effectué afin de vérifier si une tension d'alimentation est présente au niveau de la première et/ou de la deuxième sortie auxiliaire de tension (N1, N2), ensuite la première tension continue d'entrée est activée et la deuxième tension continue d'entrée est désactivée, et un contrôle est également effectué afin de vérifier si une tension d'alimentation est présente au niveau des sorties auxiliaires de tension (N1, N2).
